# EUROPEAN PATENT APPLICATION

(11) **EP 2 688 176 A1**
(43) Date of publication of application: **22.01.2014**
(21) Application number: 11861004.7
(22) Date of filing: 02.06.2011
(51) Int. Cl.: H02J 7/00

(54) **ELECTRIC WORK MACHINE**

(30) Priority: 14.03.2011 JP 2011055743
(71) Applicant: Yanmar Co., Ltd., Osaka 530-8311 (JP)
(72) Inventor: MOTEGI, Shinichi, Osaka-shi Osaka 530-8311 (JP)
(74) Representative: Hinkelmann, Klaus
(86) International application number: PCT/JP2011/062707
(87) International publication number: WO 2012/124176

(57) **Abstract**

An electrically-driven work machine can exchange electric power between a storage battery and an electric power system or between the storage battery and a load by utilizing an inverter equipped therein.

When electric power is exchanged between the storage battery BT and the electric power system PW or the load, the connection between the inverter INV and the storage battery BT is disconnected by an on-off switch S0. Further, by change-over relays RY1 to RY3, one of AC phases from the inverter INV is connected to a wire LC1 via a DC inductor Ldc, and the other two phases are connected to the electric power system PW or the load via AC inductors Lac. When a motor Ma is driven by the storage battery, the on-off switch SO provides a connection between the anode or cathode of the inverter and the storage battery BT, and the AC terminals of the inverter INV are connected to the first to third wires LA1 to AL3 of the motor Ma by the change-over means RY1 to RY3.

## Description

### [TECHNICAL FIELD]

The present invention relates to an electrically-driven work machine in which a motor is driven by an inverter which receives DC voltage from a storage battery.

### [BACKGROUND ART]

Recently, smart grid technology has been developed to optimize electric power supply by controlling the flow of electric power from both the supply side and the demand side. In this technology, the concepts of "V2G (Vehicle to Grid)" and "V2H (Vehicle to Home)" have attracted attention.

"V2G" is a system for exchanging (interchanging) electric power between a storage battery mounted in an electric vehicle (such as an electric car) and an electric power system or between such a storage battery and a load. "V2H" is a system for utilizing electric power of a storage battery mounted in an electric vehicle (such as an electric car) for domestic backup.

For example, when a storage battery and a load are connected, electric power is supplied from the storage battery to the load. When a storage battery and an electric power system are connected, the storage battery and the electric power system are interconnected with each other. In either case, when an electric vehicle is not in service as a means for transportation, a large-volume (for example, from a few kWh to about a dozen kWh) storage battery mounted in an electric vehicle is utilized as an electric power source.

Incidentally, an electrically-driven work machine that is driven by a storage battery, such as a lawn mower or a digger, is usually designed to have a motor driven by an inverter which receives DC voltage from the storage battery.

In such an electrically-driven work machine, it has been conceived to exchange (interchange) electric power between a storage battery and an electric power system or between a storage battery and a load by means of an inverter provided in the electrically-driven work machine. For example, Patent Document 1 suggests a battery charger which uses a rectifier module, wherein the battery charger charges a secondary battery from an external power supply by controlling an inverter element and using inductance of a motor as a boosting element, and also charges electric power from the external power supply into the secondary battery by using other elements than inductance of the motor as a boosting element.

### [PRIOR ART REFERENCE]

### [PATENT DOCUMENT]

[PATENT DOCUMENT 1] JP 2000-354331 A

### [SUMMARY OF THE INVENTION]

### [PROBLEMS TO BE SOLVED BY THE INVENTION]

Although the battery charger according to Patent Document 1 can charge a battery by supplying electric power from an external power supply (an electric power system) to a secondary battery (a storage battery), Patent Document 1 has made no consideration about supplying electric power from the storage battery to the electric power system or a load. In other words, the battery charger according to Patent Document 1 cannot exchange electric power between the storage battery and the electric power system or between the storage battery and the load.

In view of this problem, an object of the present invention is to provide an electrically-driven work machine in which a motor is driven by DC voltage supplied from a storage battery to an inverter, and which is capable of exchanging electric power between the storage battery and the electric power system or between the storage battery and the load by utilizing the inverter provided in the electrically-driven work machine.

### [MEANS TO SOLVE THE PROBLEMS]

In order to solve the above problem, the present invention provides an electrically-driven work machine according to the first to third aspects as described below.

### (1) Electrically-driven work machine according to the first aspect of the present invention

An electrically-driven work machine according to the first aspect of the present invention has a motor, an inverter, on off means, change-over means, first connection control means, and second connection control means. The inverter receives DC voltage from a storage battery and drives the motor. The on-off means disconnects a DC side of the inverter from a positive or negative electrode of the storage battery. The change-over means selectively connects an AC phase from the inverter either to a first wire connected to the motor or to a wire connected to an end of a DC inductor whose other end is connected to a wire between the storage battery and the on-off means, and selectively connects other AC phases from the inverter either to second and third wires connected to the motor or to wires connected to an end of at least one AC inductors whose other end is connected to an electric power system or a load. The first connection control means causes the on-off means to disconnect an anode or cathode of the inverter from the storage battery, and causes the change-over means to connect the one AC phase from the inverter to the wire between the storage battery and the on-off means via the DC inductor and also to connect the other AC phases from the inverter to the electric power system or the load via the AC inductor. The second connection control means causes the on-off means to connect the anode or cathode of the inverter to the storage battery, and causes the change-over means to connect an AC side of the inverter to the first to third wires connected to the motor.

The electrically-driven work machine according to the first aspect of the present invention is capable of driving the motor by the storage battery, by causing the on-off means to connect the storage battery to the anode or cathode of the inverter, and causing the change-over means to connect the AC side of the inverter to the first to third wires connected to the motor. On the other hand, the electrically-driven work machine according to the first aspect of the present invention is also capable of exchanging electric power between the storage battery and the electric power system or between the storage battery and the load, by causing the on-off switch to disconnect the anode or cathode of the inverter from the storage battery, and causing the change-over means to connect an AC phase from the inverter via the DC inductor to the wire between the storage battery and the on-off switch, and also to connect the other AC phases to the electric power system or the load via the AC inductor.

### (2) Electrically-driven work machine according to the second aspect of the present invention

An electrically-driven work machine according to the second aspect of the present invention has a motor, an inverter, on-off means, first change-over means, second change-over means, first connection control means, and second connection control means. The inverter receives DC voltage from a storage battery and drives the motor. The on-off means disconnects a DC side of the inverter from a positive or negative electrode of the storage battery. The first change-over means is for a first wire connected to an AC phase from the inverter at a neutral point side of a field winding of the motor, and selectively connects the first wire either to a wire for short-circuiting the first wire with other field windings of the motor or to a wire connected to a wire between the storage battery and the on-off means. The second change-over means is for other AC phases from the inverter, and selectively connects the other AC phases from the inverter either to second and third wires connected to the motor or to wires connected to an end of at least one AC inductor whose other end is connected to an electric power system or a load. The first connection control means causes the on-off means to disconnect an anode or cathode of the inverter from the storage battery, causes the first change-over means to connect the first wire to the wire between the storage battery and the on-off means, and causes the second change-over means to connect the other AC phases from the inverter to the electric power system or the load via the AC inductor. The second connection control means causes the on-off means to connect the anode or cathode of the inverter to the storage battery, causes the first change-over means to short-circuit all of the field windings of the motor with each other via the first wire, and causes the second change-over means to connect the other AC phases from the inverter to the second and third wires.

The electrically-driven work machine according to the second aspect of the present invention is capable of driving the motor by the storage battery, by causing the on-off means to connect the storage battery to the anode or cathode of the inverter, causing the first change-over means to short-circuit the first wire with other field windings of the motor, and causing the second change-over means to connect the other AC phases from the inverter to the second and third wires. On the other hand, the electrically-driven work machine according to the second aspect of the present invention is also capable of exchanging electric power between the storage battery and the electric power system or between the storage battery and the load, by causing the on-off switch to disconnect the anode or cathode of the inverter from the storage battery, causing the first change-over means to connect the first wire to the wire between the storage battery and the on-off switch, and causing the second change-over means to connect the other AC phases to the electric power system or the load via the AC inductor.

For example, in the electrically-driven work machine according to the first and second aspects of the present invention, an autotransformer may be used in place of the AC inductor.

According to this specified arrangement, the turns ratio of the autotransformer can be set in accordance with the difference in voltage between the electric power system and the storage battery or between the load and the storage battery. As a result, even if voltages are different between the electric power system and the storage battery or between the load and the storage battery, this electrically-driven work machine is adjustable to such difference in voltage.

For example, in the electrically-driven work machine according to the first and second aspects of the present invention, a multiple winding transformer may be used in place of the AC inductor.

According to this specified arrangement, the turns ratio of the multiple winding transformer can be set in accordance with the difference in voltage between the electric power system and the storage battery or between the load and the storage battery. As a result, even if voltages are different between the electric power system and the storage battery or between the load and the storage battery, this electrically-driven work machine is adjustable to such difference in voltage. Further, physical isolation between the electric power system and the storage battery or between the load and the storage battery can enhance safety.

### (3) Electrically-driven work machine according to the third aspect of the present invention

An electrically-driven work machine according to the third aspect of the present invention has a motor, an inverter, on-off means, first change-over means, second change-over means, first connection control means, and second connection control means. The inverter receives DC voltage from a storage battery and drives the motor. The on-off means disconnects a DC side of the inverter from a positive or negative electrode of the storage battery. The first change-over means selectively connects the one AC phase from the inverter either to a first wire connected to the motor or to a wire connected to an end of a DC inductor whose other end is connected to a wire between the storage battery and the on-off means. The second change-over means is for second and third wires connected to other AC phases from the inverter at a neutral point side of field windings of the motor, and selectively connects the second and third wires either to a wire for short-circuiting all of the field windings of the motor with each other or to a wire connected to an electric power system or a load. The first connection control means causes the on-off means to disconnect an anode or cathode of the inverter from the storage battery, causes the first change-over means to connect the one AC phase from the inverter to the wire between the storage battery and the on-off means via the DC inductor, and causes the second change-over means to connect the second and third wires to the electric power system or the load via the field windings of the motor. The second connection control means causes the on-off means to connect the anode or cathode of the inverter to the storage battery, causes the first change-over means to connect the one AC phase from the inverter to the positive or negative electrode of the storage battery via the DC inductor, and causes the second change-over means to short-circuit all of the field windings of the motor with each other via the second and third wires.

The electrically-driven work machine according to the third aspect of the present invention is capable of driving the motor by the storage battery, by causing the on-off means to connect the storage battery to the anode or cathode of the inverter, causing the first change-over means to connect the one AC phase from the inverter to the positive or negative electrode of the storage battery via the DC inductor, and causing the second change-over means to short-circuit the second and third wires with all of the field windings of the motor. On the other hand, the electrically-driven work machine according to the third aspect of the present invention is also capable of exchanging electric power between the storage battery and the electric power system or between the storage battery and the load, by causing the on-off switch to disconnect the anode or cathode of the inverter from the storage battery, causing the first change-over means to connect the one AC phase from the inverter via the DC inductor to the wire between the storage battery and the on-off switch, and causing the second change-over means to connect the second and third wires to the electric power system or the load via the field windings of the motor.

### [EFFECTS OF THE INVENTION]

As described above, in each of the electrically-driven work machines according to the first to third aspects of the present invention, a motor is driven by DC voltage supplied from the storage battery to the inverter. The inverter provided in the electrically-driven work machine is utilized to enable electric power exchange between the storage battery and the electric power system or between the storage battery and the load.

### [BRIEF DESCRIPTION OF THE DRAWINGS]

[FIG. 1] FIG. 1 is a basic circuit diagram showing a schematic configuration of an electric drive provided in an electrically-driven work machine according to Embodiment 1.
[FIG. 2] FIG. 2 is a circuit diagram which shows, in detail, an example of the inverter in the basic circuit diagram of FIG. 1.
[FIG. 3] FIG. 3 is a table indicating the ON or OFF state of the on-off switch as well as the switch units in the first to third change-over relays, in the case where the motor is driven by the storage battery, and in the case where electric power is exchanged between the storage battery and the electric power system.
[FIG. 4] FIG. 4 is a circuit diagram for a work circuit in the electric drive according to Embodiment 1, configured in the case where the motor is driven by the storage battery, with a terminal of the on-off switch being connected to the positive electrode of the storage battery.
[FIG. 5] FIG. 5 is a circuit diagram for an electric power exchange circuit in the electric drive according to Embodiment 1, configured in the case where electric power is exchanged between the storage battery and the electric power system, with a terminal of the on-off switch being connected to the positive electrode of the storage battery.
[FIG. 6] FIG. 6 shows circuit diagrams for the electric drive according to Embodiment 1, with a terminal of the on-off switch being connected to the negative electrode of the storage battery. FIG. 6(a) is a circuit diagram for a work circuit, configured in the case where the motor is driven by the storage battery. FIG. 6(b) is a circuit diagram for an electric power exchange circuit, configured in the case where electric power is exchanged between the storage battery and the electric power system.
[FIG. 7] FIG. 7 is a basic circuit diagram showing a schematic configuration of an electric drive provided in an electrically-driven work machine according to Embodiment 2.
[FIG. 8] FIG. 8 is a basic circuit diagram of the electric drive according to Embodiment 2, in which an autotransformer is provided in place of the AC inductors.
[FIG. 9] FIG. 9 is a basic circuit diagram of the electric drive according to Embodiment 2, in which a multiple winding transformer is provided in place of the AC inductors.
[FIG. 10] FIG. 10 is a basic circuit diagram showing a schematic configuration of an electric drive provided in an electrically-driven work machine according to Embodiment 3.
[FIG. 11] FIG. 11 is a basic circuit diagram showing a schematic configuration of an electric drive provided in the electrically-driven work machine according to an additional embodiment.

### [MODE FOR CARRYING OUT THE INVENTION]

Embodiments of the present invention are hereinafter described with reference to the attached drawings. It should be understood that the following embodiments are mere realization of the present invention and have no intention of limiting the technical scope of the present invention.

### (Embodiment 1)

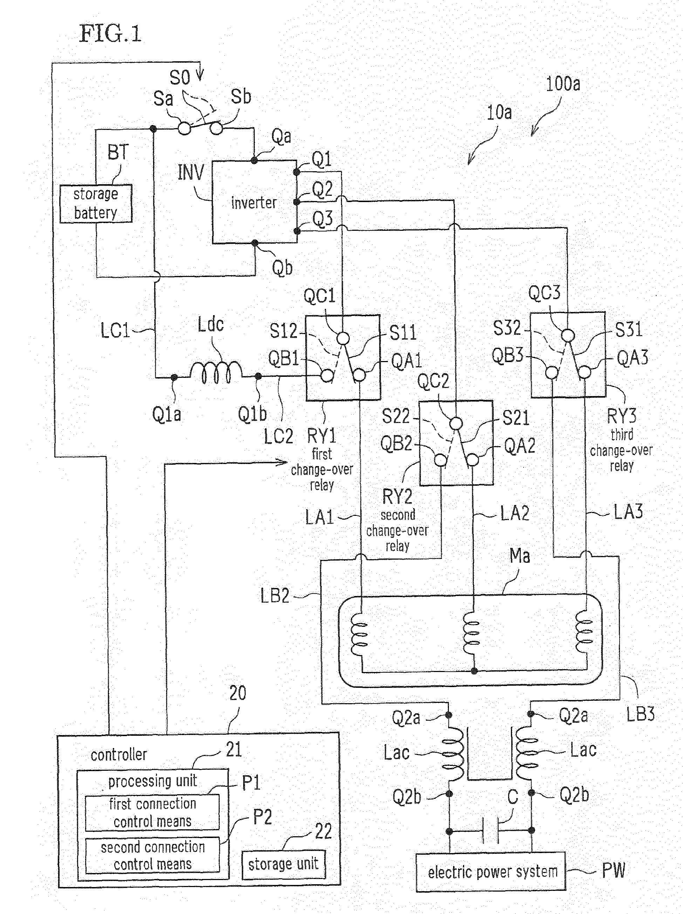

FIG. 1 is a basic circuit diagram showing a schematic configuration of an electric drive 10a provided in an electrically-driven work machine 100a according to Embodiment 1.

The electric drive 10a as shown in FIG. 1 includes a storage battery BT, a motor Ma, an inverter INV, an on-off switch S0, and a plurality of change-over relays (in this embodiment, first to third change-over relays RY1 to RY3), a DC inductor Ldc, and AC inductors (specifically, inductors for power system connection) Lac. The on-off switch S0 is an example of on-off means in the first aspect of the present invention. The first to third change-over relays RY1 to RY3 constitute change-over means in the first aspect of the present invention.

In the on-off switch S0, one terminal Sa is connected to one of the electrodes (for example, the positive electrode) of the storage battery BT, and the other terminal Sb is connected to one of the DC connection terminals (i.e., a connection terminal Qa) of the inverter INV.

In the inverter INV, one of the DC connection terminals (i.e., a connection terminal Qa) is connected to the other terminal Sb of the on-off switch S0, as described above, and the other DC connection terminal Qb is connected to the other electrode (for example, the negative electrode) of the storage battery BT.

In Embodiment 1, the AC side of the inverter INV is in a three-phase configuration, and the motor Ma is a three-phase AC motor. However, the configuration of the inverter and the motor should not be limited thereto. Alternatively, the AC side of the inverter INV may be in a single-phase configuration, and the motor may be a single-phase AC motor.

The first to third change-over relays RY1 to RY3 respectively include first switch units S11, S21, and S31 composed of common terminals QC1, QC2, and QC3 and first change-over terminals QA1, QA2, and QA3 (see solid lines in FIG. 1), and second switch units S12, S22, and S32 composed of the common terminals QC1, QC2, and QC3 and second change-over terminals QB1, QB2, and QB3 (see broken lines in FIG. 1).

In the DC inductor Ldc, an end Q1a is connected to the electrode of the storage battery BT which is connected to the on-off switch S0 (for example, the positive electrode), and the other end Q1b is connected to the second switch unit of one of the first to third change-over relays RY1 to RY3 (in this embodiment, the switch unit S 12 of the first change-over relay RY1).

In the electric drive 10a, any one of the AC terminals Q1, Q2, and Q3 of the inverter INV (in this embodiment, the terminal Q1) is connected to the motor Ma or the DC inductor Ldc via any one of the first to third change-over relays RY1, RY2, and RY3 (in this embodiment, the first change-over relay RY1), and the other AC terminals of the inverter INV (in this embodiment, the terminals Q2 and Q3) are connected to the motor Ma or to the electric power system or the load (in this embodiment, the electric power system PW) via the other change-over relays (in this embodiment, the second and third change-over relays RY2 and RY3).

To be specific, the AC inductors Lac are composed of a pair of AC inductors Lac and Lac. The DC inductor Ldc has the end Q1a connected to a wire LC1 which is connected to a wire between the storage battery BT and the on-off switch S0. With respect to the first to third change-over relays RY1 to RY3, the common terminals QC1, QC2, and QC3 are connected to the AC terminals Q1, Q2, and Q3 of the inverter INV. The change-over terminals QA1, QA2, and QA3 of the first switch units S11, S21, and S31 are connected to the first to third wires LA1, LA2, and LA3 which are connected to the motor Ma. Further, any one of the second switch units S12, S22, and S32 (in this embodiment, the switch unit S12) has its change-over terminal (in this embodiment, the change-over terminal QB1) connected to a wire LC2 which is connected to the other end Q1b of the DC inductor Ldc, and the other switch units (in this embodiment, the switch units S22 and S32) have their change-over terminals (in this embodiment, the change-over terminals QB2 and QB3) connected to two wires LB2 and LB3 which are connected to ends Q2a and Q2a of the AC inductors Lac and Lac, respectively.

To be more specific, regarding the two wires LB2 and LB3, the wire LB2 is connected to the end Q2a of the first AC inductor Lac, and the wire LB3 is connected to the end Q2a of the second AC inductor Lac. The other end Q2b of the first AC inductor Lac is connected to an end of the electric power system PW, and the other end Q2b of the second AC inductor Lac is connected to the other end of the electric power system PW.

Additionally, if the electric drive 10a is connected to the electric power system PW as in Embodiment 1, a capacitor C is connected in parallel to the connection lines of the electric power system PW (in this embodiment, a capacitor C is located between the AC inductors Lac and Lac and the electric power system PW, so as to bring the output waveform as close as possible to an intended sinusoidal AC voltage waveform. If a load is provided instead of the electric power system PW, a capacitor C may be or may not be provided depending on the type of the load.

The thus configured electric drive 10a can connect or disconnect one of the electrodes (for example, the positive electrode) of the storage battery BT to or from the DC terminal of the inverter INV by the on-off switch S0. Besides, by the first change-over relay RY1, the AC terminal Q1 of the inverter INV can be selectively connected to the wire LA1 connected to the motor Ma or to the other end Q1b of the DC inductor Ldc. By the second and third change-over relays RY2 and RY3, the AC terminals Q2 and Q3 of the inverter INV can be selectively connected to the wires LA2 and LA3 connected to the motor Ma or to the wires LB2 and LB3 connected to the electric power system PW via the AC inductors Lac.

Additionally, the electric drive 10a is configured to activate the on-off switch S0 and the first to third change-over relays RY1 to RY3 automatically.

The electric drive 10a is further equipped with a controller 20. The controller 20 includes a processing unit 21 such as CPU (Central Processing Unit) and a storage unit 22. The storage unit 22 includes a storage memory such as a ROM (Read Only Memory) or a RAM (Random Access Memory), and stores various data such as various control programs, required functions and tables.

The controller 20 is provided with first connection control means P1 and second connection control means P2. If an electric power exchangeable state is detected, in which case electric power can be exchanged between the electric power system PW and the storage battery BT or between the load and the storage battery BT (i.e., the state in which the motor Ma is not driven by the electric power from the storage battery BT), the first connection control means P1 causes the on-off switch S0 to disconnect the storage battery BT from the anode or cathode (for example, the anode) of the inverter INV. Further in this electric power exchangeable state, the first connection control means P1 causes the first change-over relay RY1 to connect one of the AC phases from the inverter INV via the DC inductor Ldc to the wire LC1 which is connected to the wire between the storage battery BT and the on-off switch S0, and the first connection control means P1 also causes the second and third change-over relays RY2 and RY3 to connect the other two AC phases from the inverter INV to the electric power system PW via the AC inductors Lac. On the other hand, if a motor drivable state is detected, in which case the motor Ma can be driven by the electric power from the storage battery BT (i.e., the state in which electric power is not exchanged between the electric power system PW and the storage battery BT or between the load and the storage battery BT), the second connection control means P2 causes the on-off switch S0 to connect the storage battery to the anode or cathode of the inverter INV, and also causes the first to third change-over relays RY1 to RY3 to connect the AC phases from the inverter INV to the first to third wires LA1 to LA3 of the motor Ma.

In detail, the controller 20 is provided with connection detecting means which detects a connection with the electric power system PW or the load. This connection detecting means may be equipped with a sensor for detecting mechanical connection with the electric power system PW or the load, or a sensor for detecting voltage or resistance of the electric power system PW or the load. Owing to this configuration, the controller 20 can distinguish between the motor drivable state and the electric power exchangeable state.

The thus configured electric drive 10a can activate the on-off switch S0 and the first to third change-over relays RY1 to RY3 automatically and can thereby improve user's operability.

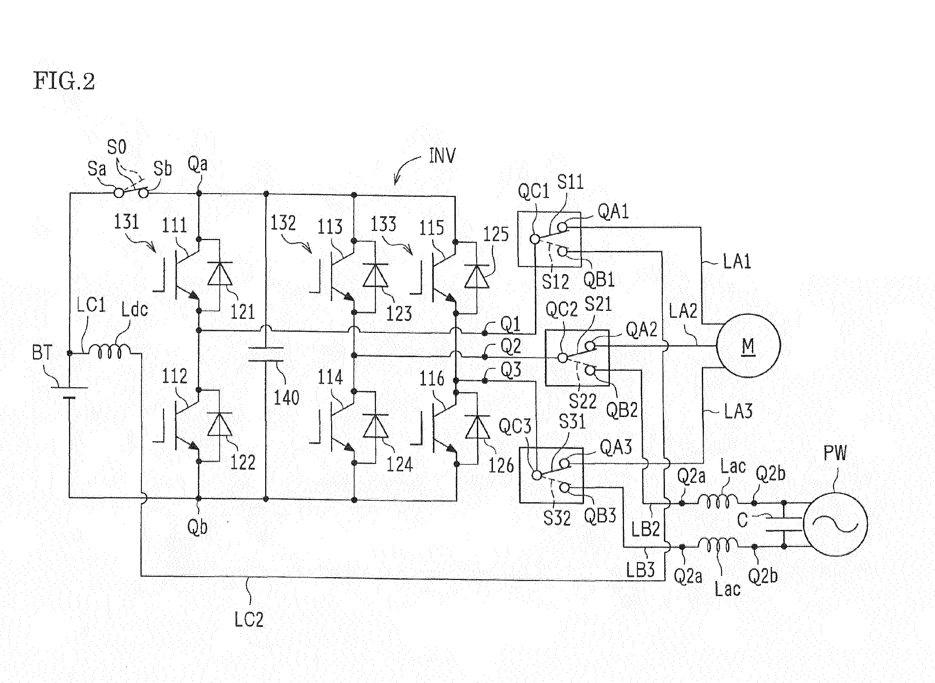

FIG. 2 is a circuit diagram which shows, in detail, an example of the inverter INV in the basic circuit diagram of FIG. 1.

As shown in FIG. 2, the inverter INV includes first to sixth semiconductor switches 111 to 116, first to sixth diodes 121 to 126, and a capacitor 140.

Each of the first to sixth semiconductor switches 111 to 116 is a semiconductor device which can pass electric current only in one direction. The first to sixth diodes 121 to 126 are connected in parallel to the first to sixth semiconductor switches 111 to 116, respectively, in such a manner that the direction of electric current flowing through the diodes 121 to 126 is opposite to the direction through the semiconductor switches 111 to 116.

The anode of the first diode 121 parallel-connected to the first semiconductor switch 111 is connected to the cathode of the second diode 122 parallel-connected to the second semiconductor switch 112. The first semiconductor switch 111, the first diode 121, the second semiconductor switch 112, and the second diode 122 are connected in this manner to constitute a first leg 131.

The anode of the third diode 123 parallel-connected to the third semiconductor switch 113 is connected to the cathode of the fourth diode 124 parallel-connected to the fourth semiconductor switch 114. The third semiconductor switch 113, the third diode 123, the fourth semiconductor switch 114, and the fourth diode 124 are connected in this manner to constitute a second leg 132.

The anode of the fifth diode 125 parallel-connected to the fifth semiconductor switch 115 is connected to the cathode of the sixth diode 126 parallel-connected to the sixth semiconductor switch 116. The fifth semiconductor switch 115, the fifth diode 125, the sixth semiconductor switch 116, and the sixth diode 126 are connected in this manner to constitute a third leg 133.

In the first to third legs 131 to 133, the cathodes of the first, third and fifth diodes 121, 123 and 125 are connected to one terminal of the capacitor 140. Also in the first to third legs 131 to 133, the anodes of the second, fourth and sixth diodes 122, 124 and 126 are connected to the other terminal of the capacitor 140.

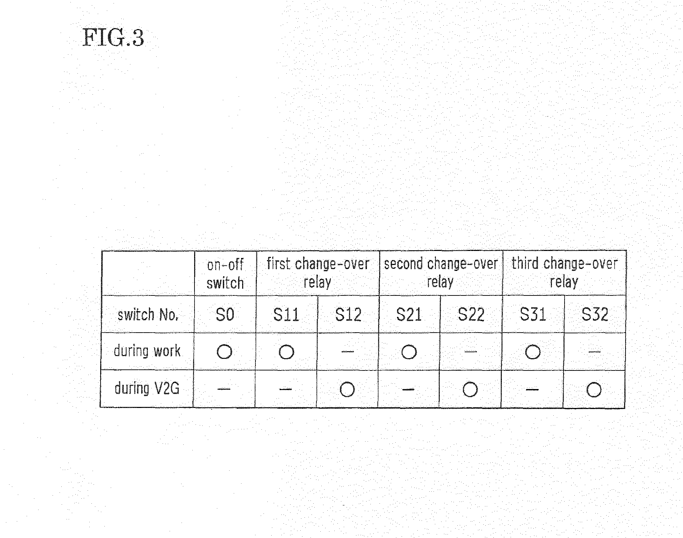

FIG. 3 is a table indicating the ON or OFF state of the on-off switch S0 as well as the switch units (S11, S12), (S21, S22), and (S31, S32) in the first to third change-over relays RY1 to RY3, in the case where the motor Ma is driven by the storage battery BT (specifically, during work) and in the case where electric power is exchanged between the storage battery BT and the electric power system PW (specifically, during V2G). In FIG. 3, "during work" refers to the case where the motor Ma is driven by the storage battery BT, and "during V2G" refers to the case where electric power is exchanged between the storage battery BT and the electric power system PW. Also in FIG. 3, the symbol "-" means that the switch unit is off, and the symbol "○" means that the switch unit is on.

When the motor Ma is driven by the storage battery BT (specifically, during work), the controller 20 turns on the on-off switch S0 so as to connect the DC side of the inverter INV to the positive or negative electrode (for example, positive electrode) of the storage battery BT. In addition, when the motor Ma is driven by the storage battery BT (specifically, during work), the controller 20 allows the first to third change-over relays RY1 to RY3 to connect to and turn on the first switch units S11, S21, and S31 so as to connect the AC terminals Q1, Q2, and Q3 of the inverter INV to the motor Ma.

Thus, by connecting the AC terminals Q1, Q2, and Q3 of the inverter INV to the motor Ma, it is possible to drive the motor Ma by the storage battery BT.

On the other hand, when electric power is exchanged between the storage battery BT and the electric power system PW (specifically, during V2G), the controller 20 turns off the on-off switch S0 so as to disconnect the one or the other DC terminal Qa or Qb of the inverter INV from the positive or negative electrode (for example, the positive electrode) of the storage battery BT. In addition, when electric power is exchanged between the storage battery BT and the electric power system PW (specifically, during V2G), the controller 20 causes the first relay RY1 to connect to and turn on the second switch unit S 12 so as to connect the other end Q1b of the DC inductor Ldc to the AC terminal Q1 of the inverter INV, and the controller 20 further causes the second and third change-over relays RY2 and RY3 to connect to and turn on the second switch units S22 and S32 so as to connect the AC terminals Q2 and Q3 of the inverter INV to the electric power system PW.

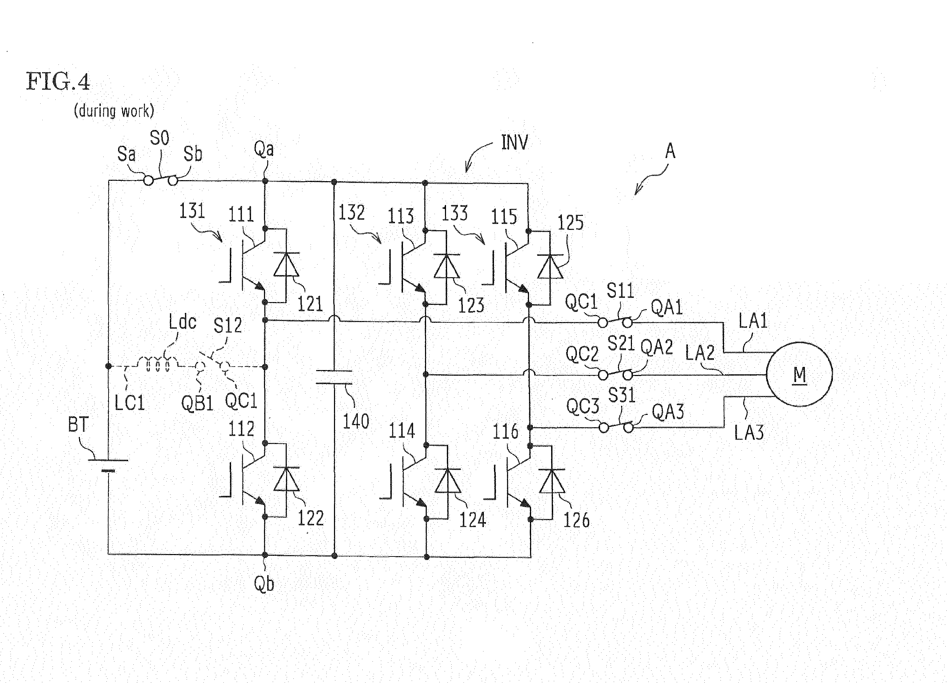

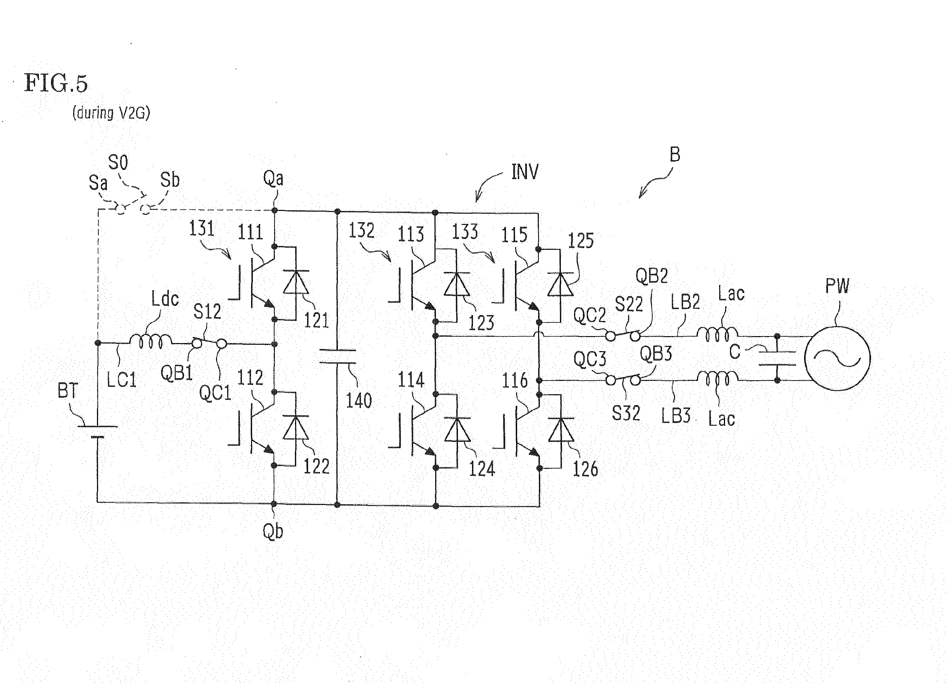

FIG. 4 is a circuit diagram for a work circuit A in the electric drive 10a according to Embodiment 1, configured in the case where the motor Ma is driven by the storage battery BT, with the terminal Sa of the on-off switch S0 being connected to the positive electrode of the storage battery BT. FIG. 5 is a circuit diagram for an electric power exchange circuit B in the electric drive 10a according to Embodiment 1, configured in the case where electric power is exchanged between the storage battery BT and the electric power system PW, with the terminal Sa of the on-off switch S0 being connected to the positive electrode of the storage battery BT.

The electric drive 10a according to Embodiment 1 can provide the work circuit A shown in FIG. 4 when the motor Ma is driven by the storage battery BT (during work), and the electric power exchange circuit B shown in FIG. 5 when electric power is exchanged between the storage battery BT and the electric power system PW (during V2G).

Namely, for example, when the motor Ma is driven by the storage battery BT in the electric drive 10a (see FIG. 4), midpoints of the first to third legs 131 to 133 are connected to the first to third wires LA1 to LA3 of the motor Ma. These connections allow the motor Ma to be driven by the storage battery BT. On the other hand, when electric power is exchanged between the storage battery BT and the electric power system PW (see FIG. 5), a midpoint of the first leg 131 is connected to the other end of the DC inductor Ldc, and midpoints of the second and third legs 132 and 133 are connected to the two wires LB2 and LB3 of the electric power system PW. These connections allow electric power to be exchanged between the storage battery BT and the electric power system PW.

As described above, according to the electric drive 10a of Embodiment 1, when the motor Ma is driven by the storage battery BT (see FIG. 4), the on-off means S0 connects the storage battery BT to the anode or cathode (the anode in the example of FIG. 4) of the inverter INV, and the first to third change-over relays RY1 to RY3 connect the first to third wires LA1, LA2, and LA3 of the motor Ma to the AC terminals of the inverter INV. Eventually, it is possible to drive the motor Ma by the storage battery BT. On the other hand, when electric power is exchanged between the storage battery BT and the electric power system PW or between the storage battery BT and the load (see FIG. 5), the on-off switch S0 disconnects the anode or cathode (the anode in the example of FIG. 5) of the inverter INV from the storage battery BT. Further, the first change-over relay connects one of the AC phases from the inverter INV via the DC inductor Ldc to the wire LC1 which is connected to the wire between the storage battery BT and the on-off switch S0, and the second and third change-over relays RY2 and RY3 connect the other two phases to the electric power system PW or the load via the AC inductors Lac and Lac. Eventually, it is possible to exchange electric power between the storage battery BT and the electric power system PW or between the storage battery BT and the load.

In Embodiment 1, the terminal Sa of the on-off switch S0 is connected to the positive electrode of the storage battery BT. Alternatively, the terminal Sa of the on-off switch S0 may be connected to the negative electrode of the storage battery BT.

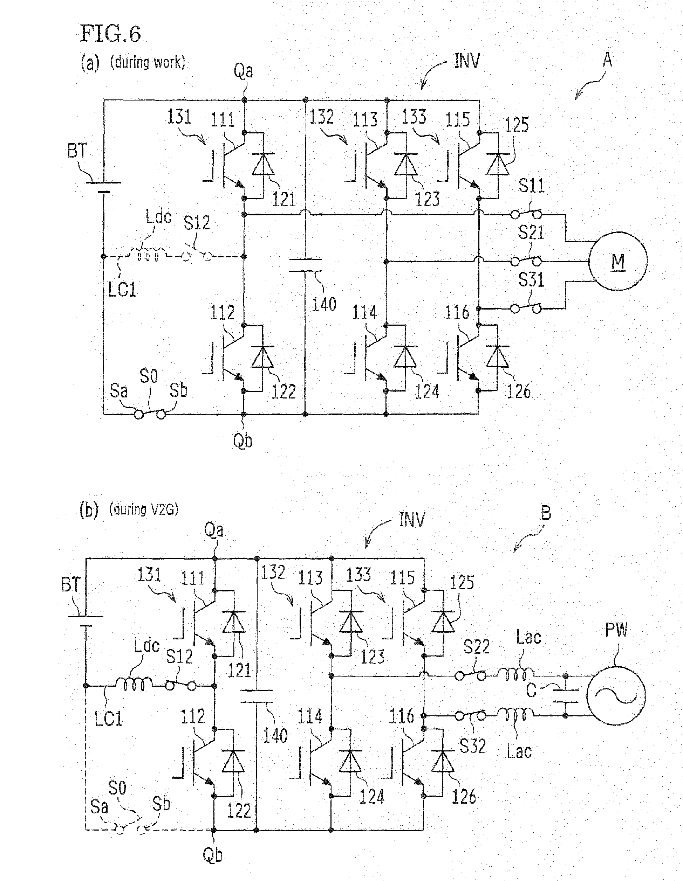

FIG. 6 shows circuit diagrams for the electric drive 10a according to Embodiment 1, with the terminal Sa of the on-off switch S0 being connected to the negative electrode of the storage battery BT. FIG. 6(a) is a circuit diagram for the work circuit A, configured in the case where the motor Ma is driven by the storage battery BT. FIG. 6(b) is a circuit diagram for the electric power exchange circuit B, configured in the case where electric power is exchanged between the storage battery BT and the electric power system PW.

Also in the work circuit A and the electric power exchange circuit B shown in FIG. 6, it is possible to drive the motor Ma by the storage battery BT and to exchange electric power between the storage battery BT and the electric power system PW, just as in the work circuit shown in FIG. 4 and the electric power exchange circuit shown in FIG. 5.

### (Embodiment 2)

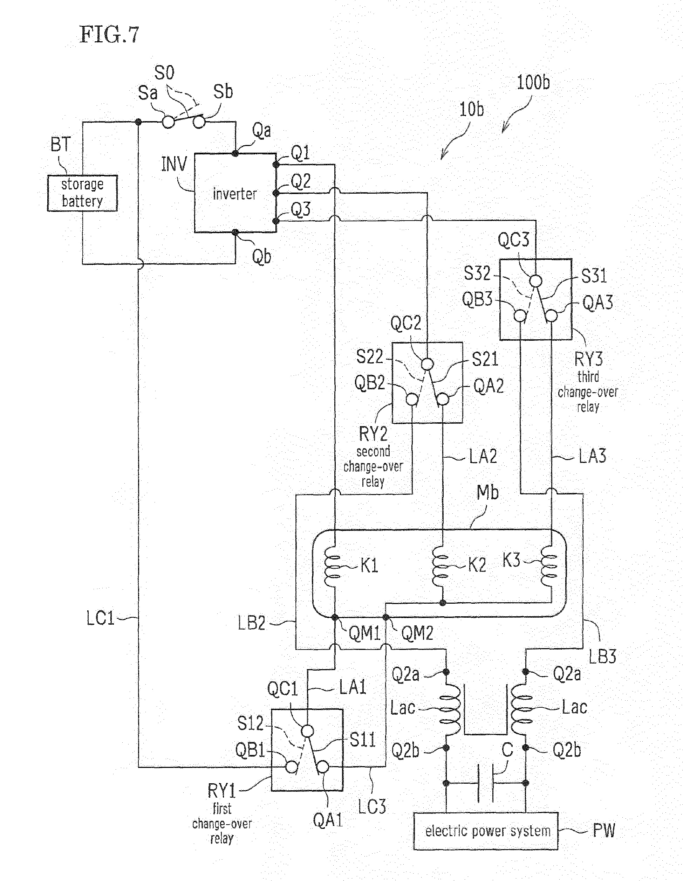

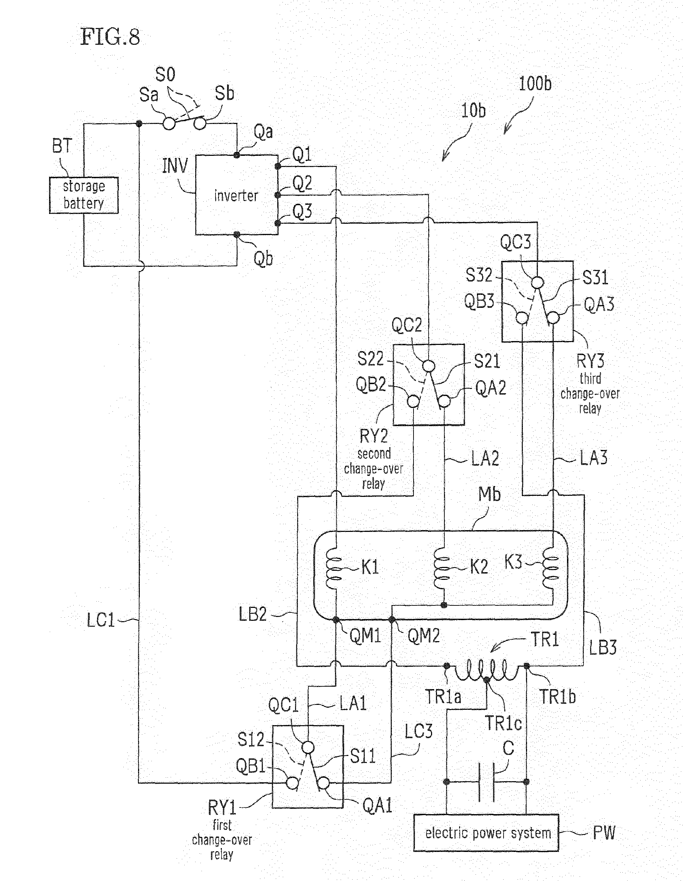

FIG. 7 is a basic circuit diagram showing a schematic configuration of an electric drive 10b provided in an electrically-driven work machine 100b according to Embodiment 2. The controller 20 is not shown in FIG. 7, and in FIGs. 8 to 11 described later.

The electric drive 10b shown in FIG. 7 is identical to the electric drive 10a shown in FIG. 1, except for omitting the DC inductor Ldc, replacing the motor Ma with a motor Mb, and locating the first change-over relay RY1 at a neutral point side of the motor Mb. In Embodiment 2, the first change-over relay RY1 constitutes first change-over means according to the second aspect of the present invention, and the second and third change-over relays RY2 and RY2 constitute second change-over means according to the second aspect of the present invention.

Regarding the electric drive 10b shown in FIG. 7, the same elements as mentioned with respect to the electric drive 10a shown in FIG. 1 are designated by the same reference signs, and the following description is focused on differences from the electric drive 10a shown in FIG. 1.

The motor Mb has one of its input phases connected to the terminal Q1 which, or one of the AC phases from the inverter INV. The motor Mb includes, for one phase, a field winding K1 whose end terminal is not directly connected to the neutral point. The motor Mb also includes an output terminal QM1 connected with the end terminal of the field winding K1 for one phase and an output terminal QM2 connected with the neutral point of field windings K2 and K3 for the other phases.

In the electric drive 10b, the output terminal QM1 of the motor Mb is connected to a wire LC3 or a wire LC1 via the first change-over relay RY1. The wire LC3 is connected to the output terminal(s) QM2 and QM3 of the motor Mb and short-circuits the finishing ends of the other field windings K2 and K3 with the finishing end of the field winding K1 of the motor Mb. The wire LC1 is connected to the wire between the storage battery BT and the on-off switch S0. To be more specific, in the first change-over relay RY1, the first wire LA1 connected to the common terminal QC1 is connected to the output terminal QM1 of the motor Mb, the change-over terminal QA1 of the first switch unit S11 is connected to the wire LC3, and the change-over terminal QB1 of the second switch unit S 12 is connected to the wire LC 1.

In the thus configured electric drive 10b, the field winding K1 for one phase from the motor Mb is connected to the terminal Q1 for one of the AC phases from the inverter INV. By the first change-over relay RY1, the output terminal QM1 of the field winding K1 can be selectively connected to the wire LC3 connected to the output terminal QM2 of the motor Mb or to the wire LC1 connected to the wire between the storage battery BT and the on-off switch S0.

When the motor Mb is driven by the storage battery BT, the controller 20 (not shown in FIG. 7, see instead FIG. 1) is configured to turn on the first switch unit S11 by switching the first change-over relay RY1 to the first switch unit S11, thereby short-circuiting (creating a neutral point) the other field windings K2 and K3 with the output terminal QM1 of the field winding K1 for one phase from the motor Mb. When electric power is exchanged between the storage battery BT and the electric power system PW, the controller 20 is configured to turn on the second switch unit S12 by switching the first change-over relay RY1 to the second switch unit S12, thereby connecting the output terminal QM1 of the field winding K1 for one phase from the motor Mb to the wire LC1 which is connected to the wire between the storage battery BT and the on-off switch S0.

The above-described electric drive 10b according to Embodiment 2 not only takes advantage of Embodiment 1 but can also utilize the field winding K1 for one phase from the motor Mb instead of the DC inductor Ldc (see FIG. 1) used in Embodiment 1.

### (Modified Example 1 for Embodiments 1 and 2)

In Embodiments 1 and 2 illustrated in FIGs. 1 to 7, the AC inductors Lac may be replaced with an autotransformer.

FIG. 8 is a basic circuit diagram of the electric drive 10b according to Embodiment 2, in which an autotransformer TR1 is provided in place of the AC inductors Lac. Although FIG. 8 illustrates an example of applying an autotransformer TR1 to the electric drive 10b of Embodiment 2, an autotransformer can be similarly applied to the electric drive 10a of Embodiment 1.

The autotransformer TR1 is a type of transformer which shares a part of the winding between the primary winding and the secondary winding. For example, in the case where electric power is supplied from the storage battery BT to the electric power system PW, a terminal TR1a of the primary winding is connected to the wire LB2 which is connected to the change-over terminal QB2 of the second change-over relay RY2, and the common end TR1b for the primary winding and the secondary winding is connected to the wire LB3 which is connected to the change-over terminal QB3 of the third change-over relay RY3. Further, one end of the electric power system PW is connected to the common end TR1b of the autotransformer TR1, and the other end of the electric power system PW is connected to the terminal TR1c of the secondary winding of the autotransformer TR1. In this example, the autotransformer TR1 is designed to drop AC voltage which is supplied from the storage battery BT and converted by the inverter INV, in comparison with the voltage at the storage battery BT. Instead, the autotransformer TR1 may be designed to boost AC voltage which is supplied from the storage battery BT and converted by the inverter INV, in comparison with the voltage at the storage battery BT.

In the latter case, although not shown, the connection between the autotransformer TR1 and the wire LB2 which is connected to the change-over terminal QB2 of the second change-over relay RY2, and the connection between the autotransformer TR1 and the other end of the electric power system PW are interchanged with each other.

The thus configured electric drives 10a and 10b of Embodiments 1 and 2 can set the turns ratio of the autotransformer TR1 in accordance with the difference in voltage between the electric power system PW and the storage battery BT or between the load and the storage battery BT. As a result, even if voltages are different between the electric power system PW and the storage battery BT or between the load and the storage battery BT, the electric drives 10a and 10b are adjustable to such difference in voltage.

### (Modified Example 2 for Embodiments 1 and 2)

In Embodiments 1 and 2 illustrated in FIGs. 1 to 7, the AC inductors Lac may be replaced with a multiple winding transformer because, for safety reasons (e.g. against electric leakage), physical isolation between the primary side and the secondary side of a transformer is preferable.

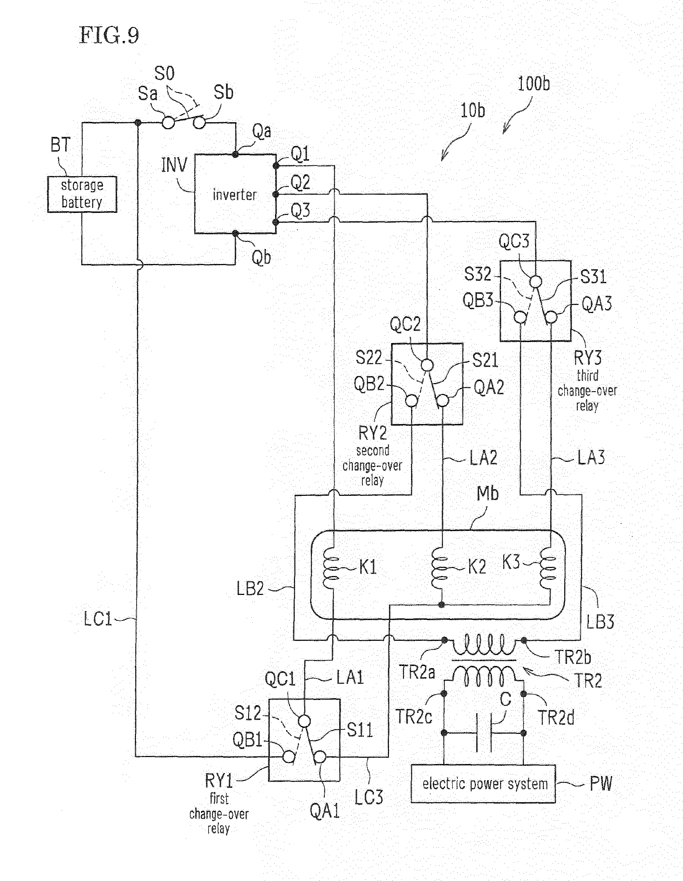

FIG. 9 is a basic circuit diagram of the electric drive 10b according to Embodiment 2, in which a multiple winding transformer TR2 is provided in place of the AC inductors Lac. Although FIG. 9 illustrates an example of applying a multiple winding transformer TR2 to the electric drive 10b of Embodiment 2, a multiple winding transformer can be similarly applied to the electric drive 10a of Embodiment 1.

The multiple winding transformer TR2 is a type of transformer in which the primary side and the secondary side are physically isolated from each other. For example, in the case where electric power is supplied from the storage battery BT to the electric power system PW, one of the terminals of the primary winding (i.e., a terminal TR2a) is connected to the wire LB2 which is connected to the change-over terminal QB2 of the second change-over relay RY2, and the other terminal TR2b of the primary winding is connected to the wire LB3 which is connected to the change-over terminal QB3 of the third change-over relay RY3. Further, one end of the electric power system PW is connected to one of the terminals of the secondary winding (i.e., a terminal TR2c) of the multiple winding transformer TR2, and the other end of the electric power system PW is connected to the other terminal TR2d of the secondary winding of the multiple winding transformer TR2.

The thus configured electric drives 10a and 10b of Embodiments 1 and 2 can set the turns ratio of the multiple winding transformer TR1 in accordance with the difference in voltage between the electric power system PW and the storage battery BT or between the load and the storage battery BT. As a result, even if voltages are different between the electric power system PW and the storage battery BT or between the load and the storage battery BT, the electric drives 10a and 10b are adjustable to such difference in voltage. Further, physical isolation between the electric power system PW and the storage battery BT or between the load and the storage battery BT can enhance safety.

### (Embodiment 3)

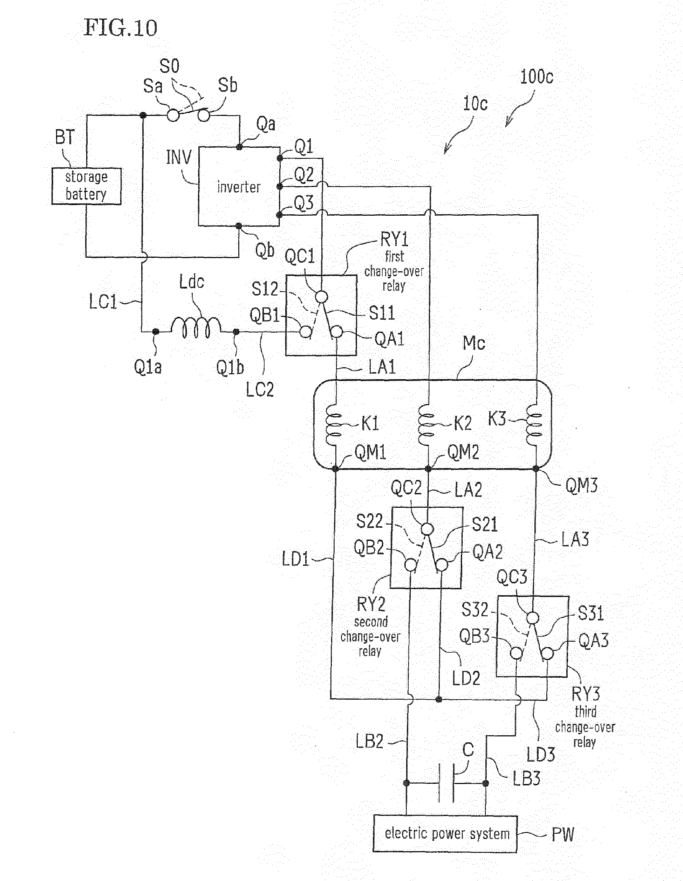

FIG. 10 is a basic circuit diagram showing a schematic configuration of an electric drive 10c provided in an electrically-driven work machine 100c according to Embodiment 3.

The electric drive 10c shown in FIG. 10 is identical to the electric drive 10a shown in FIG. 1, except for omitting the AC inductors Lac, replacing the motor Ma with a motor Mc, and locating the second and third change-over relays RY2 and RY3 at a neutral point side of the motor Mc. In Embodiment 3, the first change-over relay RY1 constitutes first change-over means according to the third aspect of the present invention, and the second and third change-over relays RY2 and RY2 constitute second change-over means according to the third aspect of the present invention.

Regarding the electric drive 10c shown in FIG. 10, the same elements as mentioned with respect to the electric drive 10a shown in FIG. 1 are designated by the same reference signs, and the following description is focused on differences from the electric drive 10a shown in FIG. 1.

The motor Mc has two of its input phases connected to the terminals Q2 and Q3, or two of the AC phases from the inverter INV. The motor Mc includes, for three phases, field windings K1, K2 and K3 whose end terminals are not directly connected to the neutral point. The motor Mc also includes output terminals QM1, QM2 and QM3 connected with the end terminals of the field windings K1, K2 and K3.

In the electric drive 10c, the first wire LD1 connected to the output terminal QM1 of the motor Mc, the wire LD2 connected to one of the change-over terminals (i.e., the change-over terminal QA2) of the second change-over relay RY2, and LD3 connected to one of the change-over terminals (i.e., the change-over terminal QA3) of the third change-over relay RY3 are mutually connected to each other. The output terminals QM2 and QM3 of the motor Mc are connected to the wires LD2 and LD3 (for two phases) of the second and third change-over relays RY2 and RY3 or to the wires LB2 and LB3 connected to the electric power system PW, respectively, via the second and third change-over relays RY2 and RY3. To be more specific, in the second and third change-over relays RY2 and RY3, the second and third wires LA2 and LA3 connected to the common terminals QC2 and QC3 are connected to the output terminals QM2 and QM3 of the motor Mc, the change-over terminals QA2 and QA3 of the first switch units S21 and S31 are connected to ends of the wires LD2 and LD3 (for two phases) which are connected to an end of the first wire LD1, and the change-over terminals QB2 and QB3 of the second switch units S22 and S32 are connected to the two wires LB2 and LB3 which are connected to the electric power system PW.

In the thus configured electric drive 10c, the field windings K2 and K3 for two phases from the motor Mc are connected to the AC terminals of the inverter INV. By the second and third change-over relays RY2 and RY3, the output terminals QM2 and QM3 of the field windings K2 and K3 can be selectively connected to the wires LD1, LD2 and LD3 for short-circuiting the finishing ends of the respective field windings of the motor Mc or to the wires LB2 and LB3 connected to the electric power system PW.

When the motor Mc is driven by the storage battery BT, the controller 20 (not shown in FIG. 10, see instead FIG. 1) is configured to turn on the first switch units S21 and S31 by switching the second and third change-over relays RY2 and RY3 to the first switch units S21 and S31, thereby short-circuiting the field winding K2 and K3 for the two phases from the motor Mc and the field winding K1 for one phase from the motor Mc (i.e., creating a neutral point) via the output terminals QM2 and QM3 of the field windings K2 and K3 for the two phases from the motor Mc. When electric power is exchanged between the storage battery BT and the electric power system PW, the controller 20 is configured to turn on the second switch units S22 and S32 by switching the second and third change-over means RY2 and RY3 to the second switch units S22 and S32, thereby connecting the second and third wires LA2 and La3 to the electric power system PW or the load via the field windings K2 and K3 of the motor Mc.

The above-described electric drive 10c according to Embodiment 3 not only takes advantage of Embodiment 1 but can also utilize the field windings K2 and K3 for two phases from the motor Mc instead of the AC inductors Lac and Lac (see FIG. 1) used in Embodiment 1.

Embodiment 3 may be further arranged according to the following embodiment, if it is not necessary to consider the influence of mutual inductance of the motor Mc.

### (Additional embodiment)

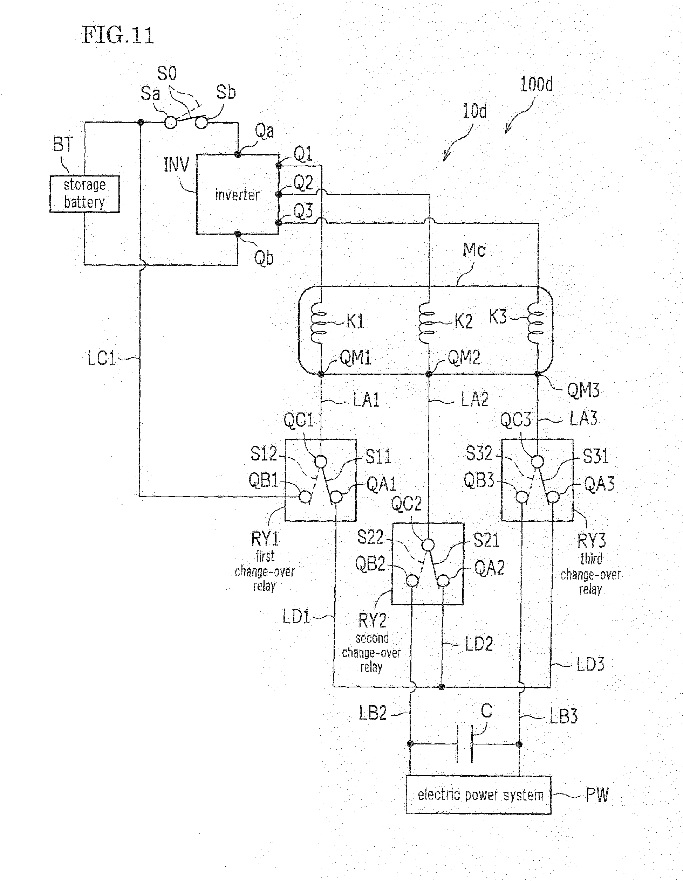

FIG. 11 is a basic circuit diagram showing a schematic configuration of an electric drive 10d provided in an electrically-driven work machine 100d according to the additional embodiment.

The electric drive 10d shown in FIG. 11 is identical to the electric drive 10c shown in FIG. 10, except for omitting the DC inductor Ldc, and locating the first change-over relay RY1 at a neutral point side of the motor Mc.

Regarding the electric drive 10d shown in FIG. 11, the same elements as mentioned with respect to the electric drive 10c shown in FIG. 10 are designated by the same reference signs, and the following description is focused on differences from the electric drive 10c shown in FIG. 10.

In the electric drive 10d, the output terminal QM1 of the motor Mc is connected to the wires LD2 and LD3 or the wire LC1 via the first change-over relay RY1. The wires LD2 and LD3 correspond to two phases of the motor Mc and lead out from the second and third change-over relays RY2 and RY3. The wire LC1 is connected to the wire between the storage battery BT and the on-off switch S0. To be more specific, in the first change-over relay RY1, the first wire LA1 connected to the common terminal QC1 is connected to the output terminal QM1 of the motor Mb, the change-over terminal QA1 of the first switch unit S11 is connected to the wire LD1, and the change-over terminal QB1 of the second switch unit S 12 is connected to the wire LC 1.

In the thus configured electric drive 10d, the field winding K1 for one phase from the motor Mc is connected to the AC side of the inverter INV. By the first change-over relay RY1, the output terminal QM1 of the field winding K1 can be selectively connected to the wires LD11, LD2 and LD3 for short-circuiting the finishing ends of the respective field windings of the motor Mc or to the wire LC1 connected to the wire between the storage battery BT and the on-off switch S0.

When the motor Mc is driven by the storage battery BT, the controller 20 (not shown in FIG. 11, see instead FIG. 1) is configured to turn on the first switch unit S11 by switching the first change-over relay RY1 to the first switch unit S11, thereby short-circuiting (creating a neutral point) the other field windings K2 and K3 with the output terminal QM1 of the field winding K1 for one phase from the motor Mc. When electric power is exchanged between the storage battery BT and the electric power system PW, the controller 20 is configured to turn on the second switch unit S12 by switching the first change-over relay RY1 to the second switch unit S12, thereby connecting the output terminal QM1 of the field winding K1 for one phase from the motor Mc to the wire LC1 which is connected to the wire between the storage battery BT and the on-off switch S0.

The above-described electric drive 10d according to the additional embodiment not only takes advantage of Embodiment 3 but can also use the field winding K1 for one phase from the motor Mc instead of the DC inductor Ldc (see FIG. 10) used in Embodiment 3.

Additionally, in Embodiments 1 to 3 and the additional embodiment, the on-off switch S0 and the first to third change-over relays RY1 to RY3 are operated automatically by the connection detecting means. However, instead of, or in addition to, the automatic operation by the connection detecting means, the motor drivable state and the electric power exchangeable state may be manually changed by user's manipulation.

The above-described electric drives 10a to 10d are applicable to any electrically-driven work machines that are driven by storage batteries, including construction machinery such as tractors, diggers, wheel loaders and carriers, and agricultural machinery such as cultivators and rice transplanters.

### [DESCRIPTION OF THE REFERENCE NUMERALS]

- 10a to 10d: electric drives
- 20: controller
- 100a to 100d: electrically-driven work machines
- BT: storage battery
- INV: inverter
- K1 to K3: field windings
- LA1 to LA3: wires (an example of the first to third wires)
- LB1 to LB3: wires
- LC1 to LC3: wires
- LD1: wire (an example of the first wire)
- Ma to Mc: motors
- PW: electric power system
- P1: first connection control means
- P2: second connection control means
- QM1 to QM3: output terminals
- RY1 to RY3: first to third change-over relays (an example of the change-over means)
- SW0: on-off switch (an example of the on-off means)
- TR1: autotransformer
- TR2: multiple winding transformer

## Claims

1. An electrically-driven work machine comprising:
a motor;
an inverter which receives DC voltage from a storage battery and drives the motor;
on-off means for disconnecting a DC side of the inverter from a positive or negative electrode of the storage battery;
change-over means for selectively connecting an AC phase from the inverter either to a first wire connected to the motor or to a wire connected to an end of a DC inductor whose other end is connected to a wire between the storage battery and the on-off means, and for selectively connecting other AC phases from the inverter either to second and third wires connected to the motor or to wires connected to an end of at least one AC inductor whose other end is connected to an electric power system or a load;
first connection control means for causing the on-off means to disconnect an anode or cathode of the inverter from the storage battery, and causing the change-over means to connect the one AC phase from the inverter to the wire between the storage battery and the on-off means via the DC inductor and also to connect the other AC phases from the inverter to the electric power system or the load via the AC inductor; and
second connection control means for causing the on-off means to connect the anode or cathode of the inverter to the storage battery, and causing the change-over means to connect an AC side of the inverter to the first to third wires connected to the motor.

2. An electrically-driven work machine comprising:
a motor;
an inverter which receives DC voltage from a storage battery and drives the motor;
on-off means for disconnecting a DC side of the inverter from a positive or negative electrode of the storage battery;
first change-over means, for a first wire connected to an AC phase from the inverter at a neutral point side of a field winding of the motor, for selectively connecting the first wire either to a wire for short-circuiting the first wire with other field windings of the motor or to a wire connected to a wire between the storage battery and the on-off means;
second change-over means, for other AC phases from the inverter, for selectively connecting the other AC phases from the inverter either to second and third wires connected to the motor or to wires connected to an end of at least one AC inductor whose other end is connected to an electric power system or a load;
first connection control means for causing the on-off means to disconnect an anode or cathode of the inverter from the storage battery, causing the first change-over means to connect the first wire to the wire between the storage battery and the on-off means, and causing the second change-over means to connect the other AC phases from the inverter to the electric power system or the load via the AC inductor; and
second connection control means for causing the on-off means to connect the anode or cathode of the inverter to the storage battery, causing the first change-over means to short-circuit all of the field windings of the motor with each other via the first wire, and causing the second change-over means to connect the other AC phases from the inverter to the second and third wires.

3. An electrically-driven work machine according to claim 1 or 2,
wherein an autotransformer is used in place of the AC inductor.

4. An electrically-driven work machine according to claim 1 or 2,
wherein a multiple winding transformer is used in place of the AC inductor.

5. An electrically-driven work machine comprising:
a motor;
an inverter which receives DC voltage from a storage battery and drives the motor;
on-off means for disconnecting a DC side of the inverter from a positive or negative electrode of the storage battery;
first change-over means, for an AC phase from the inverter, for selectively connecting the one AC phase from the inverter either to a first wire connected to the motor or to a wire connected to an end of a DC inductor whose other end is connected to a wire between the storage battery and the on-off means;
second change-over means, for second and third wires connected to other AC phases from the inverter at a neutral point side of field windings of the motor,for selectively connecting the second and third wires either to a wire for short-circuiting all of the field windings of the motor with each other or to a wire connected to an electric power system or a load;
first connection control means for causing the on-off means to disconnect an anode or cathode of the inverter from the storage battery, causing the first change-over means to connect the one AC phase from the inverter to the wire between the storage battery and the on-off means via the DC inductor, and causing the second change-over means to connect the second and third wires to the electric power system or the load via the field windings of the motor; and
second connection control means for causing the on-off means to connect the anode or cathode of the inverter to the storage battery, causing the first change-over means to connect the one AC phase from the inverter to the positive or negative electrode of the storage battery via the DC inductor, and causing the second change-over means to short-circuit all of the field windings of the motor with each other via the second and third wires.
